# EUROPEAN PATENT APPLICATION

(11) **EP 2 921 130 A1**
(43) Date of publication of application: **23.09.2015**
(21) Application number: 12888590.2
(22) Date of filing: 15.11.2012
(51) Int. Cl.: A61C 8/00

(54) **DENTAL IMPLANT WITH FIRST INTERNAL THREAD AND SECOND INTERNAL THREAD**

(71) Applicant: Ho, Chih-chung, Taiwan 843 (TW)
(72) Inventor: Ho, Chih-chung, Taiwan 843 (TW)
(74) Representative: 2K Patentanwälte Blasberg Kewitz & Reichel
(86) International application number: PCT/CN2012/084653
(87) International publication number: WO 2014/075256

(57) **Abstract**

Disclosed is a dental implant with a first internal thread and a second internal thread, comprising a fixed part and a connecting part. The fixed part has an external threading region. The connecting part has an opening, and the opening has a first inner wall and a second inner wall set below the first internal wall. The second inner wall has a first internal thread and a second internal thread, and the directions of the first internal thread and the second internal thread are different so as to coordinate with at least one conveying means respectively, to implant or take out the dental implant. The dental implant is easy to operate, and can be combined with the conveying means without separating from or falling off of the conveying means during clinical operations, and thus contamination of the dental implant after falling off can be avoided.

## Description

### FIELD OF THE INVENTION

The present invention relates to a dental implant and particularly to a dental implant equipped with a first internal thread and a second internal thread.

### BACKGROUND OF THE INVENTION

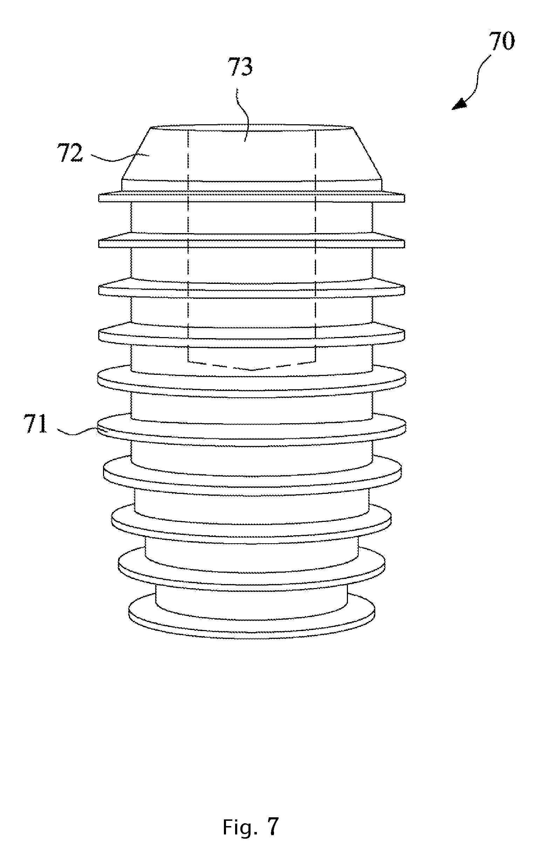

Please referring to FIG. 7, a conventional dental implant 70 includes a fixed part 71 and a connecting part 72. The fixed part 71 has a plurality of fins. The connecting part 72 is located on the fixed part 71 to connect to an abutment (not shown in the drawing).

The fins are extended outwards in a parallel manner. During implant operation the dental implant 70 has to be tapped into human bone. In an event that the implanted angle or depth is undesirable and the dental implant has to be removed, due to the opening 73 of the dental implant 70 is formed in a smooth manner without threads, it cannot be coupled safely with instruments. Therefore it makes clinical operation difficult. Moreover, if the dental implant is located on the posterior side of the upper jaw, the dental implant 70 could be inadvertently pushed into the upper jaw sinus.

Hence there is a need to provide an innovative and novel dental implant with a first internal thread and a second internal thread to resolve the aforesaid problems.

### SUMMARY OF THE INVENTION

The primary object of the present invention is to provide a dental implant equipped with a first internal thread and a second internal thread. It comprises a fixed part and a connecting part. The fixed part has an external thread region. The connecting part is located on the fixed part and has an opening. The opening has a first inner wall and a second inner wall. The second inner wall is located below the first inner wall. The opening can be connected to an abutment in a threadless manner. The second inner wall has a first internal thread and a second internal thread that are formed in different directions to respectively coordinate with at least one conveying means to facilitate implanting or removing of the dental implant.

Through the first internal thread and the second internal thread the dental implant of the invention can be moved into a human bone or removed therefrom by wrenching to facilitate clinical operation. Moreover, during clinical operation the dental implant of the invention can be coupled with a conveying means without separating or falling off, and prevent the dental implant from falling off or being pushed into the upper jaw sinus

The foregoing, as well as additional objects, features and advantages of the invention will be more readily apparent from the following detailed description, which proceeds with reference to the accompanying drawings.

### BRIEF DESCRIPTION OF THE DRAWINGS

- FIG. 1: is a schematic view of the dental implant of the invention equipped with a first internal thread and a second internal thread.
- FIG. 2: is a sectional of the dental implant of the invention equipped with a first internal thread and a second internal thread.
- FIG. 3: is a fragmentary enlarged view of the opening of the dental implant of the invention.
- FIG. 4: is a schematic view of implanting a dental implant through a first conveying means according to the invention.
- FIG. 5: is a schematic view of removing a dental implant through a second conveying means according to the invention.
- FIG. 6: is another schematic view of removing a dental implant through a second conveying means according to the invention.
- FIG. 7: is a schematic view of a conventional dental implant.

### Brief description of the numeral:

10 Dental implant
11 Fixed part
12 Connecting part
13 Top surface
20 First conveying means
21 First conveying stem
22 First structural weakened zone
30 Second conveying means
31 Second conveying stem
32 Second structure weakened zone
40 Human bone
50 Abutment
51 First part
52 Second part
70 Conventional dental implant
71 Fixed part
72 Connecting part
73 Opening
120 Opening
121 First inner wall
122 Second inner wall
123 First internal thread
124 Second internal thread
211 First external thread
311 Second external thread

### DETAILED DESCRIPTION OF THE PREFERRED EMBODIMENTS

It is to be noted that in the following discussion the terms "upper" and "lower" are not related to gravity. The "upper" means proximity to the biting plane or incisive edge of a coupled dental prosthesis, while the "lower" is opposite to the "upper".

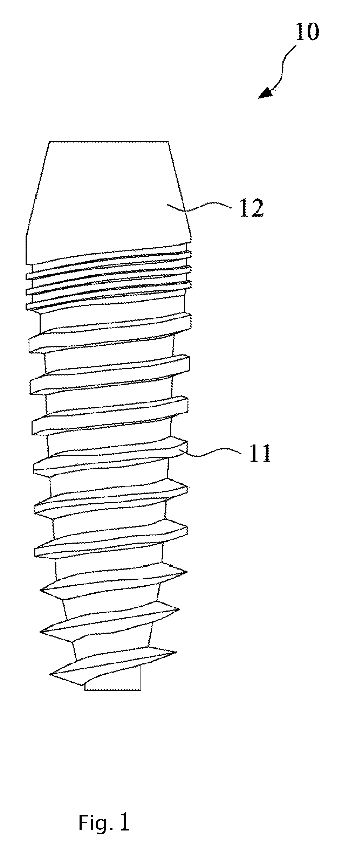

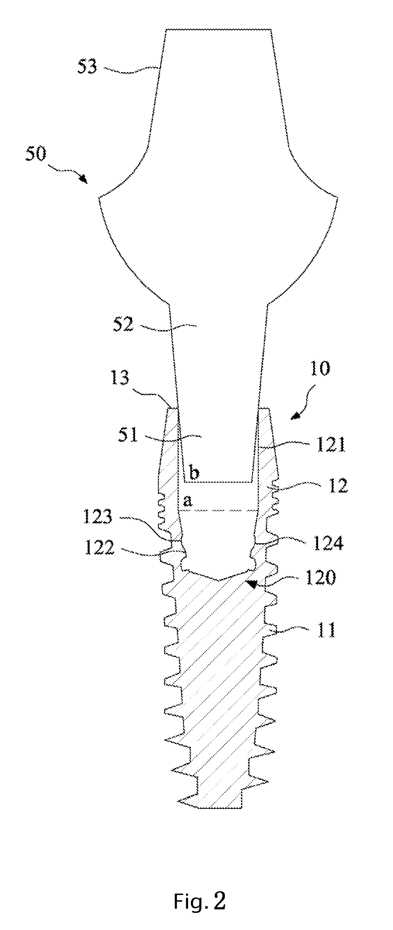

Please referring to FIGS. 1 and 2, the present invention aims to provide a dental implant 10 equipped with a first internal thread and a second internal thread. The dental implant 10 comprises a fixed part 11 and a connecting part 12. The fixed part 11 has an external thread region. In this embodiment the external thread region of the fixed part 11 includes threads formed helically rightward.

The connecting part 12 is located on the fixed part 11, and has an opening 120. The opening 120 has a top surface 13 on the dental implant 10 with a bore formed thereon and extended downward. The opening 120 has a first inner wall 121 and a second inner wall 122. The second inner wall 122 is located below the first inner wall 121. The first inner wall 121 does not have internal thread formed thereon. The opening 120 can be connected to an abutment 50 in a threadless manner, namely, the dental implant 10 and the abutment 50 can be connected in a locking taper fashion.

With the abutment 50 and the dental implant 10 connected in the locking taper fashion, the abutment 50 has a first par 51 formed in a conical shape at an angle b slightly greater than an angle a of the first inner wall 121 of the opening 120. Hence when they are made in proper sizes related to each other they can form desired locking and coupling. Such a structure is simple in structure and easy in operation, and also provides improved bacterial closure and does not generate unpleasant odor after implanted onto a patient. In addition, the first part 51 of the abutment 50 is merely in contact with the first inner wall 121 but not in contact with the second inner wall 122. The abutment 50 has a second part 52 to couple with a dental prosthesis (not shown in the drawings).

The second inner wall 122 has a first internal thread 123 and a second internal thread 124 that are formed in different directions to respectively coordinate with at least one conveying means to facilitate implanting or removing of the dental implant 10.

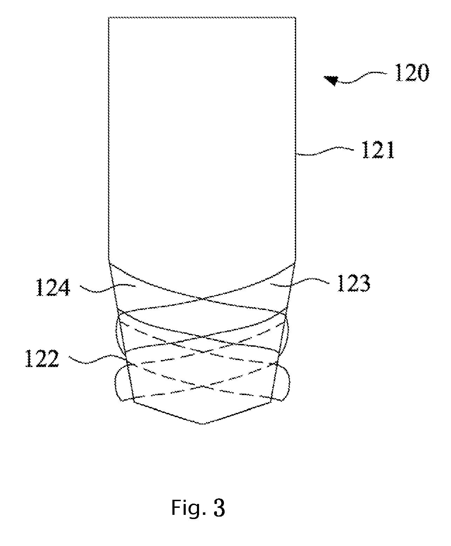

Please referring to FIG. 3, in this embodiment the first internal thread 123 is threaded helically rightward, and the second internal thread 124 is threaded helically leftward. More preferably, the first internal thread 123 and the second internal thread 124 cross each other to save space and avoid the second inner wall 122 from being too lengthy. In addition, the first internal thread 123 and the second internal thread 124 are formed at thread dimensions in a wide and round fashion to facilitate cleaning.

Since the first internal thread 123 and the second internal thread 124 are not in contact with the abutment 50 to receive forces later, they need not be formed in too many rounds in order to avoid the second inner wall 122 from being too lengthy. Thus it facilitates the fabrication of a short implant. More preferably, the first internal thread 123 is formed in one round, and the second internal thread 124 also is formed in one round.

Moreover, if the first internal thread 123 and the second internal thread 124 are formed in fewer rounds, they are curved more steeply. Collaborated with the threads that are wide and round, the first internal thread 123 and the second internal thread 124 have fewer cleaning dead spots and can make later cleaning easier.

In this embodiment the second inner wall 122 is a sloped surface and gradually shrunken toward the bottom of the opening 120. The first internal thread 123 and the second internal thread 124 also are extended to the bottom of the opening 120 along the sloped surface of the second inner wall 122, and formed respectively in one round. Moreover preferably, the threads of the first internal thread 123 and the second internal thread 124 on the sloped surface of the second inner wall 122 from the upper side to the lower side are formed gradually in varying depths from shallower to deeper, and the longitudinal diameter of the thread depth are same holistically so that the conveying means is required to respectively turn completely one round to separate from the first internal thread 123 and the second internal thread 124 , which enhance safety in clinical operation.

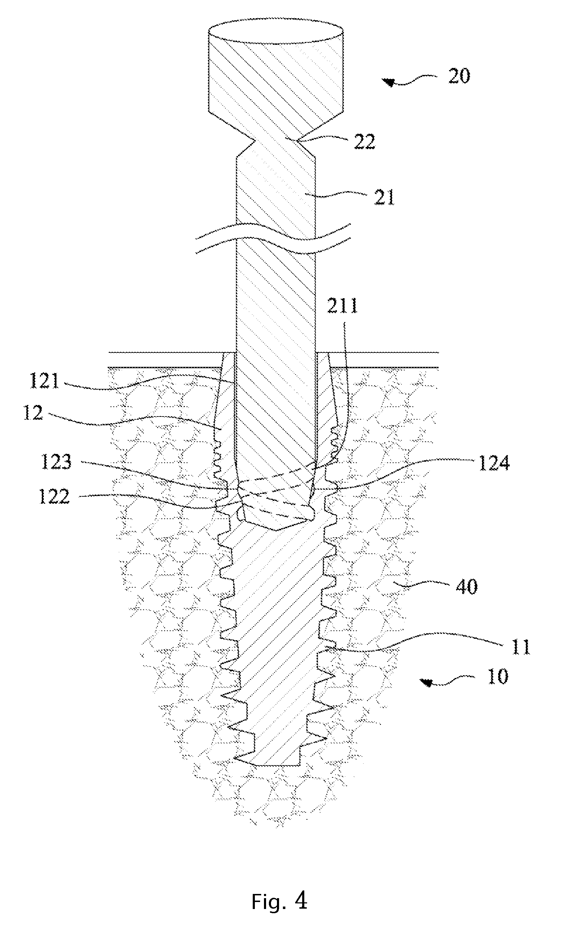

Please refer to FIG. 4 for a schematic view of implanting the dental implant through a first conveying means. The first conveying means 20 has a first conveying stem 21 to be placed in the opening 120. The first conveying stem 21 is formed at an outer diameter slightly smaller than the inner diameter of the first inner wall 121 to facilitate insertion into the opening 120. The first conveying stem 21 includes a first external thread 211 which matches the profile of the first internal thread 123, and also is helically rightward. The mating external thread region of the fixed part 11 also has a helically rightward thread. Hence the dental implant 10 can be gradually wrenched into a human bone 40 through the first conveying means 20.

The first conveying means 20 also includes a first structural weakened zone 22 located on a region of the first conveying stem 21. The first structural weakened zone 22 is formed at an outer diameter smaller than that of the first conveying stem 21 so that the first conveying means 20 can be fractured at the first structural weakened zone 22 rather than at the first external thread 211.

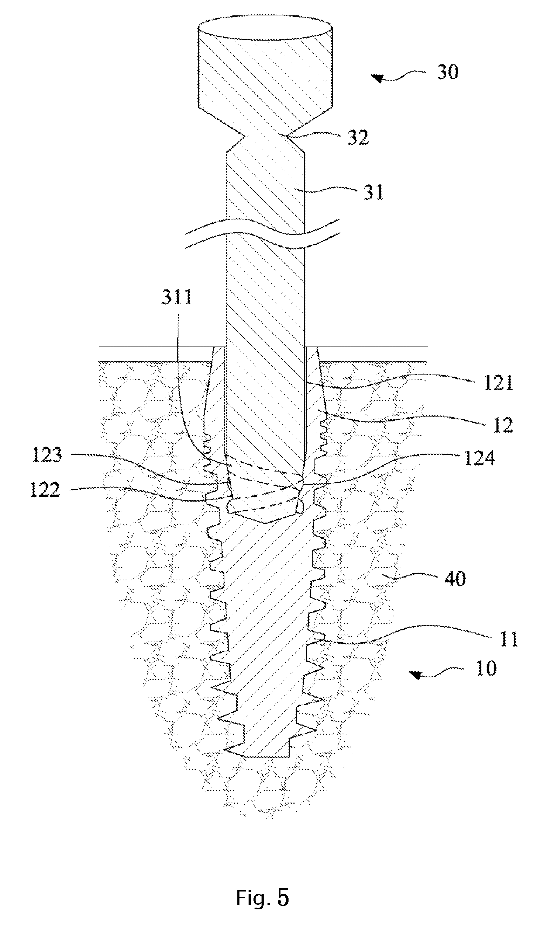

Please refer to FIG. 5 for a circumstance of removing the dental implant through a second conveying means. The second conveying means 30 has a second conveying stem 31 to be placed into the opening 120. The second conveying stem 31 is formed at an outer diameter slightly smaller than the inner diameter of the first inner wall 121 to facilitate insertion into the opening 120. The second conveying stem 31 includes a second external thread 311 which matches the profile of the second internal thread 124, and also is helically leftward. Since the external thread region of the fixed part 11 has a helically rightward thread, the dental implant 10 can be wrenched in an opposite direction for removing. As a result, through the second conveying means 30 the dental implant 10 can be gradually wrenched and removed from the human bone 40.

The second conveying means 30 further includes a second structure weakened zone 32 located on a region of the second conveying stem 31. The second structural weakened zone 32 is formed at an outer diameter smaller than that of the second conveying stem 31 so that the second conveying means 30 can be fractured at the second structural weakened zone 32 rather than at the second external thread 311.

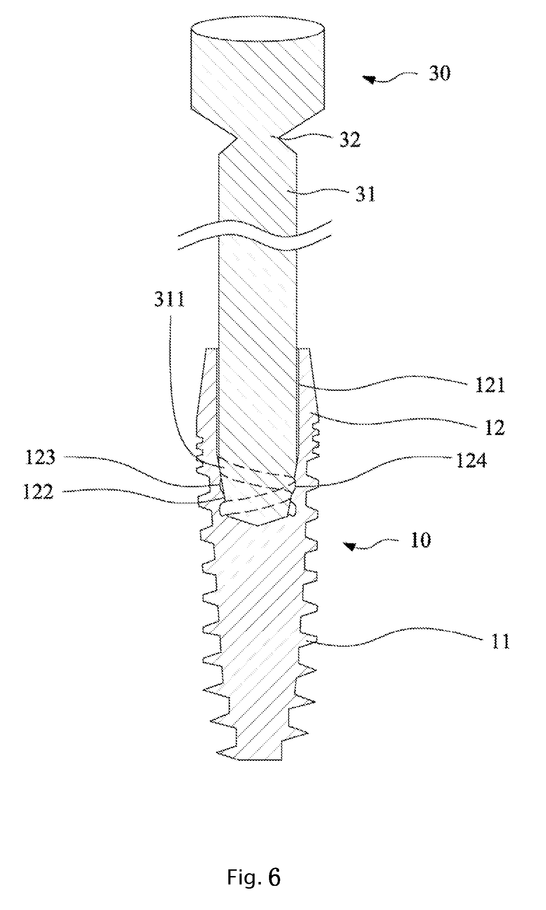

Please refer to FIG. 6 for a circumstance of removing the dental implant through the second conveying means. After the dental implant 10 has been removed from the human bone 40 via the second conveying means 30, through coordination of the profiles of the second external thread 311 and the second internal thread 124, the second external thread 311 of the second conveying means 30 maintains tightly coupling with the second internal thread 124 of the dental implant 10, hence the dental implant 10 can be prevented from separating from the second conveying means 30 or falling off during removing or after removing to avoid contamination thereof.

Through the first internal thread 123 and the second internal thread 124, the dental implant 10 of the invention can be wrenched into the human bone 40 or wrenched out to facilitate clinical operation. By coupling the dental implant 10 with the conveying means during clinical operation, it does not separate from the conveying means or fall off, hence can avoid contamination of the dental implant caused by falling off, or prevent the dental implant from being pushed into an upper jaw cavity.

While the preferred embodiments of the invention have been set forth for the purpose of disclosure, they are not the limitation of the invention, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A dental implant with first internal thread and second internal thread, comprising:
a fixed part which includes an external thread region; and a connecting part which is disposed on the fixed part and includes an opening which has a first inner wall and a second inner wall located below the first inner wall, the opening being connected with an abutment in a threadless manner, the second inner wall including a first internal thread and a second internal thread, the first internal thread and the second internal thread having different threaded directions to coordinate respectively with at least one conveying means to implant or remove the dental implant.

2. The dental implant of claim 1, wherein the first internal thread is threaded helically rightward, and the second internal thread is threaded helically leftward.

3. The dental implant of claim 2, wherein the first internal thread and the second internal thread cross each other.

4. The dental implant of claim 2, wherein the first internal thread is coordinated with a first conveying means to implant the dental implant and the second internal thread is coordinated with a second conveying means to remove the dental implant.

5. The dental implant of claim 1, wherein the first internal thread is formed in one round and the second internal thread is formed in one round.

6. The dental implant of claim 1, wherein the second inner wall is a sloped surface gradually shrunken towards the bottom of the opening.
